# EUROPEAN PATENT SPECIFICATION

(11) **EP 4 122 578 B1**
(45) Date of publication and mention of the grant of the patent: **03.09.2025**
(21) Application number: 22382687.6
(22) Date of filing: 19.07.2022
(51) Int. Cl.: B01D 29/23, B01D 29/35, B01D 35/30, E04H 4/12, F04D 29/70

(54) **FILTERING UNIT FOR SWIMMING POOL PUMPS**
FILTEREINHEIT FÜR SCHWIMMBECKENPUMPEN
UNITÉ DE FILTRATION POUR POMPES DE PISCINE

(30) Priority: 20.07.2021 ES 202131501 U
(43) Date of publication of application: 25.01.2023
(73) Proprietor: Inquide SAU, 08213 Polinya (ES)
(72) Inventor: RUIZ GARCIA, Guillermo, 08213 POLINYÀ (Barcelona) (ES); ARIAS PEREZ, Alberto, 08213 POLINYÀ (Barcelona) (ES); BOLIVAR RODRIGUEZ, Narciso, 08213 POLINYÀ (Barcelona) (ES)
(74) Representative: Herrero & Asociados, S.L.

(56) References cited:
- DE-A1- 102010 038 137
- US-A1- 2007 114 168
- US-A1- 2009 145 498
- US-A1- 2013 146 525

## Description

### OBJECT OF THE INVENTION

The present invention falls within the technical field of swimming pools, more specifically within the field of constituent parts, details or accessories of devices or installations for circulating water, especially adapted for cleaning swimming pools, and relates in particular to a filtering unit for swimming pool pumps, especially for those pumps used for recirculating water.

### BACKGROUND TO THE INVENTION

Everyone is aware of the increasing use of swimming pools, both the larger ones installed in sports parks or public or private sports areas, hotels, etc., as well as smaller swimming pools installed in neighborhood communities or even for the private use of a single dwelling.

As a result, the requirements in terms of cleanliness, convenience, safety and comfort are also increasing. These requirements also extend to the systems for suction, filtering and pumped recirculation of the surface water or, in other words, of the sheet of water at the top of the basin when it is full.

Pumping systems comprise, among other elements, a high-pressure suction pump and a pump casing which houses the pump and connects to the inside of the pool basin. These systems include a filtering unit, generally located near the water inlet, to retain the solid waste contained in the pool water that is sucked in by the pump.

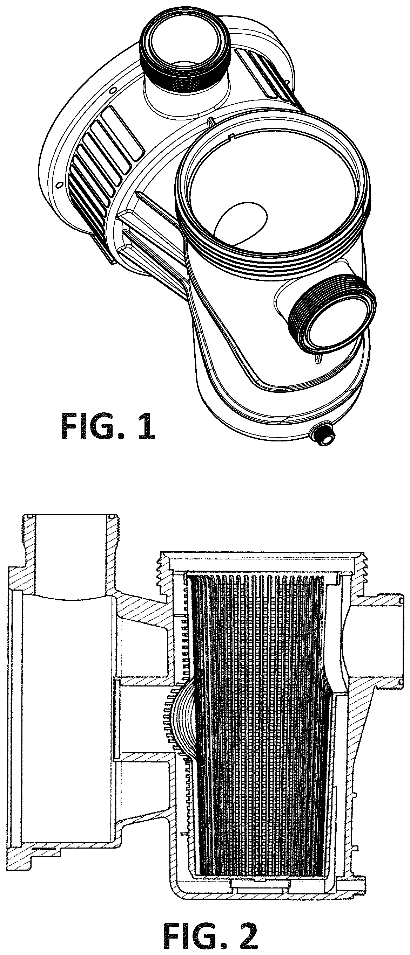

Figure 1 shows a perspective view of a filtering unit according to the current state of the art. The filtering unit consists of a hollow body or filter tank, an inlet port and an outlet port. Inside the filter tank there is a filter in the form of a basket, with a meshed wall and structural reinforcement ribs on the wall, designed to retain inside it objects and floating dirt from the pool water that has been sucked up, such as hair, leaves, etc. When necessary, this filter can be removed for cleaning.

The inlet port allows the water coming from the pool to enter the tank to be filtered, and the outlet port allows the water flow to exit free of waste, which is retained inside the filter.

However, in spite of the reinforcement ribs of the filters, the suction pumps mentioned above can sometimes, depending on the filtering needs of the pool, operate at high pressures that can cause deformations in the filter after prolonged periods of use, especially in the area of the filter that is closest to or in front of the outlet mouth, as shown in figure 2. Such deformations can also lead to accumulation points for debris retained by the filter, causing blockages that impede the normal operation of the suction system.

In addition, the filter becomes clogged with use as the retained objects that were floating in the pool water are deposited against its walls. As the mesh walls of the filter become clogged, the water cannot escape through the holes in the mesh that makes up the filter and follow a normal flow towards the outlet of the pump body, causing clogging and problems that prevent correct operation. For example, the suction pump cannot effectively suction a flow of water, which can lead to major breakdowns.

A number of patent documents are known in the current state of the art relating to devices that attempt to solve the problem caused by these filter deformations. For example, European patent application publication number EP2551004 describes a filtering unit for swimming pools and a filter cartridge for such a unit. The assembly has a cylindrical cartridge placed in a housing and made of flat pleated material. A support piece is placed on a water outlet side of the cartridge to prevent deformation of the cartridge due to suction pressure.

US2006242757 describes a hydraulic suction fuse that mounts to a conventional debris collection hatch of a swimming pool, spa or the like, to significantly reduce or eliminate any suction force on the drain mounted on the bottom or side wall of the pool, as a result of the drain being essentially completely covered by an element that obstructs the drain.

Document DE102010038137A1 relates to a circulation device for bathrooms, with a pump that can be operated by means of a drive, and a filter unit which consists of a housing and a cover, a filter insert being arranged in the housing, and the filter insert being kinematically connectable to the cover by means of coupling means is that the filter insert moves when the lid is moved.

Finally, document US2013146525A1 provides strainer members for use with pump assemblies and/or fluid systems. The present disclosure provides for advantageous strainer members that strain and/or filter fluids in fluid systems (e.g., recreational bodies of water). More particularly, the present disclosure provides for strainer members (e.g., strainer baskets) that include features that improve performance characteristics. Strainer members with an improved ability to resist degradation of pump hydraulic performance when loaded with debris, and/or an improved ability to remove air pockets trapped under the strainer cover at low flow rates are disclosed.

In all cases, these are costly and not completely effective solutions to the problems mentioned above. The need therefore arises for a filtering unit for pumping in swimming pools that solves the problems of deformation and clogging in the filter in a simple and economical way.

### DESCRIPTION OF THE INVENTION

The subject of the invention consists of a filtering unit for pumping in swimming pools comprising structural elements that prevent or mitigate the aforementioned deformations and clogging of the filter and the problems they entail in terms of the useful life of the filter and of the pump body itself, preventing clogging and breakage.

For this purpose, the filtering unit incorporates a rib located on the inner wall of the filter basket, which runs through the outlet opening and divides it into two halves. This rib has a dimension that is larger than that of the reinforcing ribs of the basket and, therefore, will always ensure that the mesh wall of the filter basket is separated from the inner wall of the tank and does not hinder the flow of water through the outlet opening.

When the water flow is directed towards the outlet port, the mesh wall and the filter reinforcement ribs are subjected to an intense traction force due to the suction from the vertical branch, which causes them to deform. The incorporation of the rib in the area of the outlet port, against which the mesh wall or a corresponding filter reinforcement rib rest, helps to exert a resistance to this traction that prevents the filter from deforming.

On the other hand, when the mesh walls of the filter become clogged, they prevent a normal flow of water towards the outlet mouth, producing turbulence that causes the mesh walls to stick to the side wall of the filter tank, which becomes clogged. The incorporation of the rib ensures a minimum and constant separation between the mesh wall of the filter and the side wall of the filter tank, at least in the area closest to the outlet mouth.

This separation creates a channel through which the water can flow to the outlet port, thus avoiding the aforementioned clogging and blockage of the suction. It also greatly reduces the differential pressure drop in the case of collapsed strainers.

The incorporation of the structural rib into the filtering unit for swimming pool pumping is therefore a simple and cost-effective solution to overcome the above-mentioned objections.

### DESCRIPTION OF THE DRAWINGS

In order to complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:
Figure 1.- Shows a top perspective view of a filtering unit for pumping in swimming pools according to the present state of the art.
Figure 2.- Shows a side view of a cut made in the filtering unit of figure 1 containing a filter, in which the deformation caused in the filter can be seen.
Figure 3.- Shows a top perspective view of the filtering unit for pumping in swimming pools that is the subject of the invention.
Figure 4.- Shows a perspective view of a section made in the filtering unit of figure 3, with a filter inside.
Figure 5.- Shows a side view of a section made in the filtering unit of figure 3, with a filter inside.
Figure 6.- Shows a perspective view of a section made in the filtering unit of figure 3, with a filter inside.

### PREFERRED EMBODIMENT OF THE INVENTION

A detailed explanation of an example of a preferred embodiment of the subject matter of the present invention is given below with the aid of the figures referred to above.

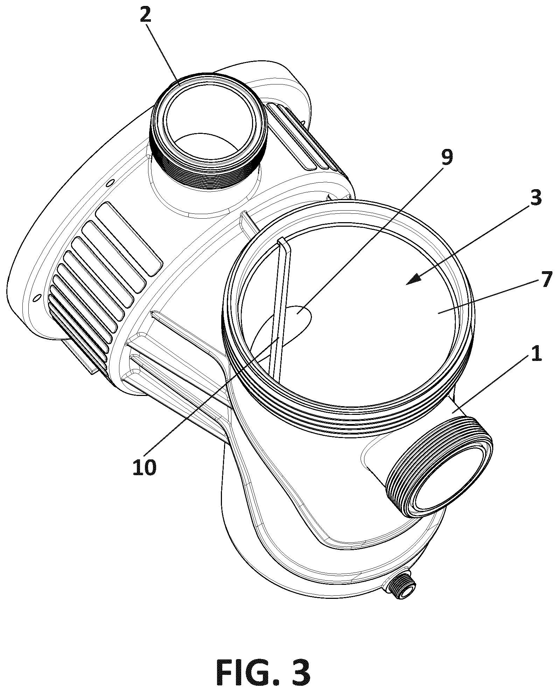

The described filtering unit for swimming pool pumps shown in figures 3-6 is intended to be part of a swimming pool pumping installation, with a suction pump for retention of the solid waste contained in the swimming pool water entering the pumping installation sucked in by the pump.

The filtering unit consists of a hollow body featuring:
- an inlet branch (1), with access to the pool shell, for the entry of a flow of water to be filtered,
- an outlet branch (2), for output of the already filtered water flow, and
- a filter tank (3), located at an intermediate point between the inlet branch (1) and the outlet branch (2), which houses a removable filter (4) to retain solid objects contained in the pool water.

The filter (4), which in this preferred embodiment is basket-shaped, has a meshed wall (5) that allows water to pass through, and reinforcing ribs (6) for structural reinforcement of the filter (4).

The filter tank (3), which in this preferred embodiment has a cylindrical geometry corresponding to that of the filter (4), has an internal housing delimited by the inner face of a curved side wall (7), in which an inlet port (8) and an outlet port (9) open, which in this preferred embodiment is located opposite the inlet port (8). The inlet port (8) allows a flow of pool water from the inlet branch (1), which is drawn in by the suction pump, to enter the filter tank (3) for filtering by the filter (4).

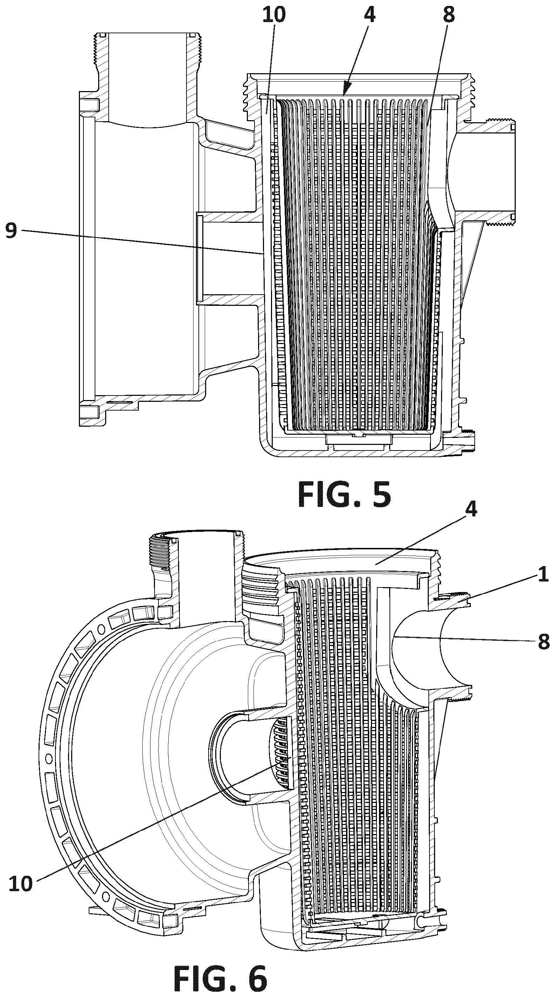

The outlet port (9) allows a flow of pool water already filtered by the filter (4) and sucked in by the suction pump to flow out of the internal housing of the filter tank (3) towards the outlet branch (2). Figure 5 illustrates the direction of pool water flow through the filtering unit.

The filter tank (3) of the filtering unit incorporates on the inner side of its side wall (7) a reinforcing rib (10) that crosses the middle area of the outlet port (9), as shown in figure 3, and divides it into two halves. In this preferred embodiment, the rib (10) has a vertical orientation with respect to a generatrix of the filter tank (3), as shown in figures 5 and 6. In this way, when the water flow is directed towards the outlet port (9), the meshed wall (5) and the reinforcing ribs (6) of the filter (4) that remain in the vicinity of the outlet port (9) are subjected to a traction force due to the suction coming from the outlet branch (2). The resistance exerted by the rib (10), against which the meshed wall (5) and/or the reinforcing ribs (6) rest, prevents deformation of the filter (4).

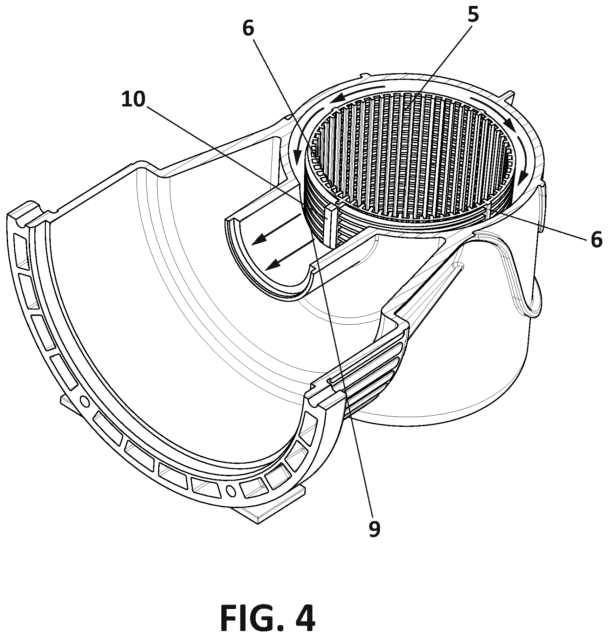

Figure 4 illustrates the other advantageous effect provided by the incorporation of the rib (10) into the filtering unit. As already indicated, when the meshed walls (5) of the filter (4) become clogged, they prevent a normal flow of water towards the outlet port (9), causing turbulence that causes the meshed walls (5) to stick to the inside face of the side wall (7) of the filter tank (3).

The incorporation of the rib (10) ensures a constant minimum separation between the meshed wall (5) of the filter (4) and the side wall (7) of the filter tank (3), at least in the area closest to the outlet port (9). This separation creates a channel through which the water can flow towards the outlet port (9), as shown in figure 4, thus avoiding clogging.

In an alternative embodiment of the filtering unit, not shown in the attached figures, the rib (10) has a horizontal orientation with respect to the generatrix of the filter vessel (3). In this case, said rib (10) may extend horizontally along the entire side wall (7), i.e. occupying the entire length of the inner diameter of the filter tank (3) as if it were an inner ring attached to the side wall (7), or it may run only between two opposite points of the perimeter edge of the outlet port (9).

In the preferred embodiment shown in the figures, the rib (10) runs along the entire height of the generatrix of the filter tank (3), i.e. along the entire side wall (7), from the base to the top. In alternative embodiments, this rib (10) may not extend along the entire length of the side wall (7), but only run between two opposite points of the perimeter edge of the outlet port (9), so that it does not occupy the entire length of the generatrix of the filter tank (3). Also, the rib (10) may be formed by a series of consecutive discontinuous sections.

Finally, the rib (10) may pass through the outlet port (9) between any two opposite points of its perimeter edge, thus dividing the outlet port (9) into two sectors of different dimensions.

## Claims

1. Filtering unit for swimming pool pumps intended to form part of a pumping installation with a suction pump, consisting of a hollow body comprising:
- an inlet branch (1) for inlet of a flow of water to be filtered,
- an outlet branch (2), for the outlet of the already filtered water flow,
- a removable filter (4) for retention of solid objects from the pool water, comprising a meshed wall (5), and
- a filter tank (3), located between the inlet branch (1) and the outlet branch (2), comprising in turn:
- an internal housing delimited by the inner face of a side wall (7), for insertion of the filter (4);
- an inlet port (8) in the side wall (7), for entry into the housing of the water flow from the inlet branch (1), and
- an outlet port (9) in the side wall (7), for the outflow of pool water already filtered by the filter (4) to the outlet branch (2),
the filtering unit being **characterised in that** the filtering tank (3) further comprises, on the inner side of its side wall (7), a rib (10) of structural reinforcement that crosses the outlet port (9).

2. Filtering unit according to claim 1 wherein the filter (4) and the filter tank (3) have cylindrical geometry, and wherein the rib (10) has an orientation parallel to one of the generatrixes of the filter tank (3).

3. Filtering unit according to claim 2 wherein the rib (10) does not occupy the entire length of the generatrix of the filter tank (3).

4. Filtering unit according to claim 1 wherein the filter (4) and the filter tank (3) have cylindrical geometry, and wherein the rib (10) has a transverse orientation to one of the generatrixes of the filter tank (3)

5. Filtering unit according to claim 4 wherein the rib (10) does not occupy the entire length of the diameter of the filter tank (3).

6. Filtering unit according to any one of the preceding claims wherein the rib (10) passes through the middle area of the outlet port (9).

7. Filtering unit according to any one of the preceding claims wherein the rib (10) is formed by a continuous section.

8. Filtering unit according to any one of claims 1-6 wherein the rib (10) is formed by discontinuous consecutive sections.

## Patentansprüche

1. Filtereinheit für Schwimmbeckenpumpen, die dazu bestimmt ist, Teil einer Pumpanlage mit einer Saugpumpe zu bilden, bestehend aus einem Hohlkörper, umfassend:
- einen Einlasszweig (1) für den Einlass eines zu filternden Wasserstroms,
- einen Auslasszweig (2) für den Auslass des bereits gefilterten Wasserstroms,
- einen abnehmbaren Filter (4) zum Zurückhalten fester Objekte aus dem Beckenwasser, umfassend eine Maschenwand (5), und
- einen Filtertank (3), der sich zwischen dem Einlasszweig (1) und dem Auslasszweig (2) befindet, der wiederum umfasst:
- ein inneres Gehäuse, das durch die Innenseite einer Seitenwand (7) begrenzt ist, zum Einsetzen des Filters (4);
- eine Einlassöffnung (8) in der Seitenwand (7) für den Eintritt des Wasserstroms aus dem Einlasszweig (1) in das Gehäuse, und
- eine Auslassöffnung (9) in der Seitenwand (7) für den Abfluss von bereits vom Filter (4) gefiltertem Beckenwasser zum Auslasszweig (2), wobei die Filtereinheit **dadurch gekennzeichnet ist, dass** der Filtertank (3) ferner auf der Innenseite seiner Seitenwand (7) eine Rippe (10) mit struktureller Verstärkung umfasst, die die Auslassöffnung (9) durchquert.

2. Filtereinheit nach Anspruch 1, wobei der Filter (4) und der Filtertank (3) eine zylindrische Geometrie aufweisen, und wobei die Rippe (10) eine Ausrichtung parallel zu einer der Mantellinien des Filtertanks (3) aufweist.

3. Filtereinheit nach Anspruch 2, wobei die Rippe (10) nicht die gesamte Länge der Mantellinie des Filtertanks (3) einnimmt.

4. Filtereinheit nach Anspruch 1, wobei der Filter (4) und der Filtertank (3) eine zylindrische Geometrie aufweisen, und wobei die Rippe (10) eine Ausrichtung quer zu einer der Mantellinien des Filtertanks (3) aufweist.

5. Filtereinheit nach Anspruch 4, wobei die Rippe (10) nicht die gesamte Länge des Durchmessers des Filtertanks (3) einnimmt.

6. Filtereinheit nach einem der vorhergehenden Ansprüche, wobei die Rippe (10) den mittleren Bereich der Auslassöffnung (9) durchquert.

7. Filtereinheit nach einem der vorhergehenden Ansprüche, wobei die Rippe (10) durch einen kontinuierlichen Abschnitt gebildet ist.

8. Filtereinheit nach einem der Ansprüche 1-6, wobei die Rippe (10) durch diskontinuierliche aufeinanderfolgende Abschnitte gebildet ist.

## Revendications

1. Unité filtrante pour des pompes de piscine destinées à faire partie d'une installation de pompage avec une pompe aspirante, consistant en un corps creux comprenant :
- un embranchement d'entrée (1) pour l'entrée d'un écoulement d'eau devant être filtré,
- un embranchement de sortie (2), pour la sortie de l'écoulement d'eau déjà filtré,
- un filtre (4) amovible pour la retenue d'objets solides provenant de l'eau de piscine, comprenant une paroi maillée (5), et
- un réservoir (3) de filtre, situé entre l'embranchement d'entrée (1) et l'embranchement de sortie (2), comprenant à son tour :
- un logement interne délimité par la face intérieure d'une paroi latérale (7), pour l'insertion du filtre (4) ;
- un orifice d'entrée (8) dans la paroi latérale (7), pour la pénétration dans le logement de l'écoulement d'eau à partir de l'embranchement d'entrée (1), et
- un orifice de sortie (9) dans la paroi latérale (7), pour l'évacuation de l'eau de piscine déjà filtrée par le filtre (4) vers l'embranchement de sortie (2),
l'unité filtrante étant **caractérisée en ce que** le réservoir (3) de filtrage comprend en outre, sur le côté intérieur de sa paroi latérale (7), une nervure (10) de renfort structural qui franchit l'orifice de sortie (9).

2. Unité filtrante selon la revendication 1 dans laquelle le filtre (4) et le réservoir (3) de filtre ont une géométrie cylindrique, et dans laquelle la nervure (10) a une orientation parallèle à l'une des génératrices du réservoir (3) de filtre.

3. Unité filtrante selon la revendication 2 dans laquelle la nervure (10) n'occupe pas toute la longueur de la génératrice du réservoir (3) de filtre.

4. Unité filtrante selon la revendication 1 dans laquelle le filtre (4) et le réservoir (3) de filtre ont une géométrie cylindrique, et dans laquelle la nervure (10) a une orientation transversale par rapport à l'une des génératrices du réservoir (3) de filtre.

5. Unité filtrante selon la revendication 4 dans laquelle la nervure (10) n'occupe pas toute la longueur du diamètre du réservoir (3) de filtre.

6. Unité filtrante selon l'une quelconque des revendications précédentes dans laquelle la nervure (10) traverse la zone médiane de l'orifice de sortie (9).

7. Unité filtrante selon l'une quelconque des revendications précédentes dans laquelle la nervure (10) est formée par une section continue.

8. Unité filtrante selon l'une quelconque des revendications 1 à 6 dans laquelle la nervure (10) est formée par des sections consécutives discontinues.
